# FASCICULE DE BREVET EUROPEEN

(11) **EP 1 831 895 B1**
(45) Date de publication et mention de la délivrance du brevet: **07.05.2008**
(21) Numéro de dépôt: 05848356.1
(22) Date de dépôt: 27.12.2005
(51) Int. Cl.: G21C 19/46

(54) **PERFECTIONNEMENT DU PROCEDE PUREX ET SES UTILISATIONS**
VERBESSERUNG DES PUREX-VERFAHRENS UND VERWENDUNGEN DAMIT
IMPROVEMENT OF THE PUREX METHOD AND USES THEREOF

(30) Priorité: 29.12.2004 FR 0414034
(43) Date de publication de la demande: 12.09.2007
(73) Titulaire: COMPAGNIE GENERALE DES MATIERES NUCLEAIRES, 78140 Velizy Villacoublay (FR)
(72) Inventeur: MOULIN, Jean-Paul, F-78390 Bois d'Arcy (FR)
(74) Mandataire: Poulin, Gérard
(86) Numéro de dépôt international: PCT/FR2005/051146
(87) Numéro de publication internationale: WO 2006/072729

(56) Documents cités:
- WO-A-99/23668
- WO-A-99/62824
- US-A- 4 131 527
- US-A- 4 787 979

## Description

### DOMAINE TECHNIQUE

La présente invention se rapporte à un procédé constituant un perfectionnement du procédé de retraitement des combustibles nucléaires usés connu sous le nom de procédé PUREX.

Le procédé selon l'invention permet, en effet, d'obtenir une séparation de l'uranium des autres actinides (plutonium, neptunium, thorium, ...) en un seul cycle de purification.

Comme le procédé PUREX, il est susceptible d'être utilisé pour retraiter des combustibles nucléaires usés à base d'oxyde d'uranium, d'oxyde mixte d'uranium et de plutonium ou encore d'oxyde mixte d'uranium et de thorium.

### ÉTAT DE LA TECHNIQUE ANTÉRIEURE

Toutes les usines commerciales de retraitement des combustibles nucléaires usés utilisent à ce jour le procédé PUREX (**P**lutonium **U**ranium **R**efining by **EX**traction) pour récupérer l'uranium et le plutonium présents dans ces combustibles.

Ceci est obtenu par la mise en oeuvre de plusieurs cycles de purification par extraction liquide-liquide.

Le premier cycle de purification vise essentiellement à décontaminer conjointement l'uranium et le plutonium en produits de fission ainsi qu'à réaliser une partition de ces deux éléments en deux flux distincts.

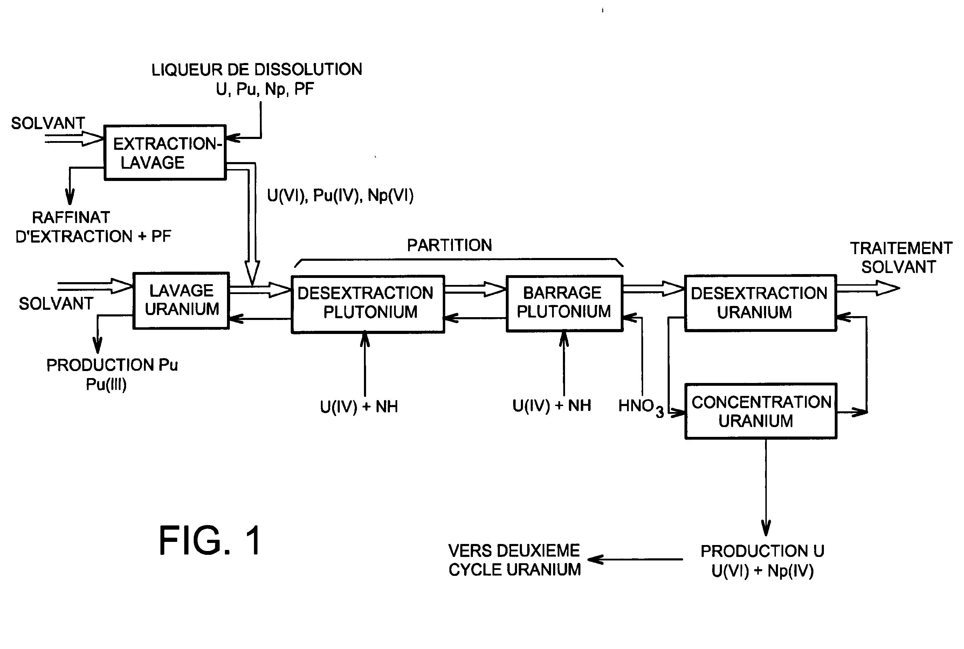

Ce cycle, tel qu'il est mis en oeuvre dans les usines modernes de retraitement des combustibles nucléaires usés telles que les usines UP3 et UP2-800 de la COGEMA en France, Thorp au Royaume-Uni ou Rokkasho au Japon, est représenté sous une forme schématique sur la figure 1.

Il commence par une opération consistant à co-extraire l'uranium et le plutonium, le premier à l'état d'oxydation (VI), le second à l'état d'oxydation (IV), de la phase aqueuse dans laquelle ils se trouvent et qui résulte de la dissolution d'un combustible usé dans de l'acide nitrique (liqueur de dissolution). Cette co-extraction est réalisée au moyen d'un solvant non miscible à l'eau, qui est constitué d'un extractant, en l'espèce le phosphate de tri-*n*-butyle (ci-après TBP), à 30% en volume dans un diluant organique, à savoir le tétrapropylène hydrogéné (ci-après TPH).

Elle est suivie d'un ou de plusieurs lavages de la phase solvant par une ou des solutions aqueuses nitriques, destinés à parfaire la décontamination de l'uranium et du plutonium en produits de fission.

L'ensemble de ces opérations de co-extraction et de lavage est symbolisé par le bloc *"Extraction-lavage"* sur la figure 1.

La phase aqueuse issue de ces opérations (raffinat d'extraction) renferme les produits de fission (PF) et est éliminée du cycle, tandis que la phase solvant, qui est chargée en uranium(VI) et en plutonium(IV), est dirigée vers une zone au niveau de laquelle est réalisée la partition de ces deux éléments.

Cette partition comprend :
- une opération consistant à désextraire la majeure partie du plutonium présent dans la phase solvant et qui est symbolisée par le bloc *"Désextraction plutonium"* sur la figure 1 ; et
- une opération consistant à parfaire la désextraction du plutonium et qui est symbolisée par le bloc *"Barrage plutonium"* sur la figure 1.

Ces deux opérations sont réalisées en réduisant le plutonium(IV) à l'état d'oxydation (III), peu extractible par le TBP, ce qui permet son passage dans une solution aqueuse nitrique, tandis que l'uranium reste dans la phase solvant.

La réduction du plutonium est pratiquée à l'aide de nitrate uraneux et d'un agent anti-nitreux (ou *"nitrous acid scavenger"* dans la littérature anglo-saxonne) dont le rôle est de stabiliser à la fois le nitrate uraneux et le plutonium(III) par destruction de l'acide nitreux. En l'espèce, l'agent anti-nitreux est du nitrate d'hydrazinium (NH), encore appelé hydrazine.

La phase aqueuse issue de la partition est soumise à un lavage par du solvant frais destiné à extraire de cette phase la fraction d'uranium susceptible d'avoir suivi le plutonium lors de sa désextraction. Ce lavage est symbolisé par le bloc *"Lavage uranium"* sur la figure 1.

La phase solvant issue de la partition est, elle, dirigée vers une zone au niveau de laquelle l'uranium(VI) est désextrait par une solution aqueuse nitrique de faible acidité. Cette désextraction est symbolisée par le bloc *"Désextraction uranium"* sur la figure 1.

Dans le premier cycle de purification illustré sur la figure 1, le neptunium présent dans la liqueur de dissolution est extrait, principalement sous forme de neptunium(VI), en même temps que l'uranium et le plutonium. Lors de la désextraction réductrice du plutonium, le neptunium(VI) est réduit par le nitrate uraneux en neptunium(IV), état dans lequel il est extractible par le TBP, quoique moins qu'à l'état d'oxydation (VI).

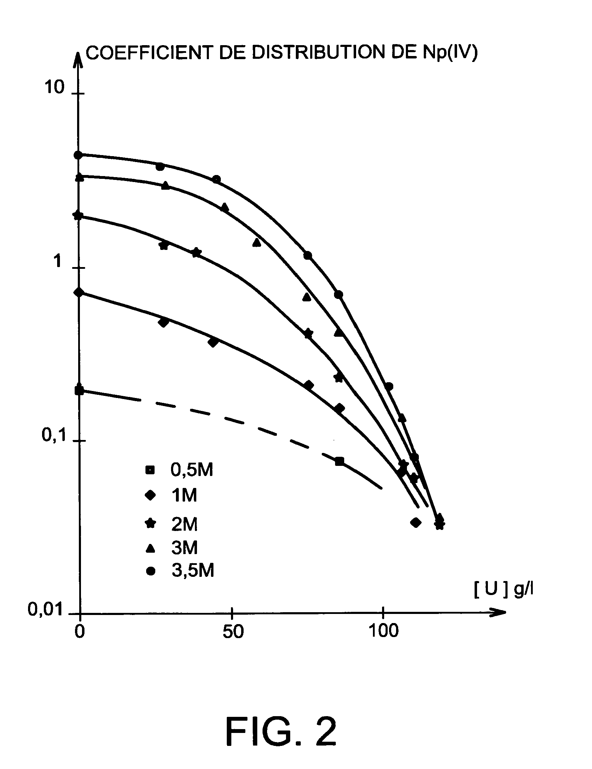

En effet, comme rapporté par Germain et al. dans J. Inorg. Chem., 1970, vol. 32, 245-253, et comme illustré sur la figure 2 qui représente les variations du coefficient de distribution du neptunium(IV) entre une phase aqueuse nitrique et une phase solvant, composée de BTP à 30% en volume dans du TPH, en fonction de la teneur en uranium(VI) de la phase solvant et pour des concentrations molaires en acide nitrique allant de 0,5 M à 3,5 M, le coefficient de distribution du neptunium(IV) croît avec l'acidité de la phase aqueuse et décroît avec la teneur en uranium(VI) de la phase solvant.

Aussi, compte tenu du rapport de débits S/A (pour Solvant/Aqueux) élevé et de la faible teneur en uranium(VI) de la phase solvant qui règnent dans les extracteurs où se déroule la partition uranium/plutonium, le neptunium(IV) reste, dans ces extracteurs, dans la phase solvant avec l'uranium. De même, la combinaison rapport de débits S/A x acidité est en général telle au niveau du *"Lavage uranium"* qu'elle renforce la tendance du neptunium(IV) à rester dans la phase solvant avec l'uranium. Au cours de la désextraction de l'uranium, les coefficients de distribution du neptunium(IV) sont inférieurs à ceux de l'uranium(VI) en sorte que le neptunium est désextrait aussi efficacement que l'uranium.

Le neptunium suit donc quasi-quantitativement l'uranium au cours du premier cycle de purification du procédé PUREX.

Dans les usines précitées de retraitement des combustibles nucléaires usés, l'effluent aqueux issu de la désextraction de l'uranium est donc soumis, après une opération de concentration (symbolisée par le bloc *"Concentration uranium"* sur la figure 1), à un cycle de purification de l'uranium dit *"deuxième cycle uranium"* afin de séparer ce dernier du neptunium.

Dans la perspective de réalisation de nouvelles usines de retraitement des combustibles nucléaires usés, il serait souhaitable de parvenir à simplifier le procédé PUREX de sorte à alléger à la fois les coûts d'investissement, d'exploitation et de maintenance de ces usines, sans réduire pour autant les performances de ce procédé en matière de rendement, de qualité et de sûreté de retraitement.

Or, l'expérience montre que la décontamination de l'uranium en produits de fission est suffisante dès le premier cycle de purification, y compris pour le ruthénium, quand le combustible usé a refroidi au moins dix ans avant son retraitement. Aussi, le *"deuxième cycle uranium"* ne se justifie-t-il, dans ce cas, que par la nécessité de séparer l'uranium du neptunium.

Les Inventeurs se sont donc fixés pour but de perfectionner le procédé PUREX tel qu'il est mis en oeuvre dans les usines modernes de retraitement des combustibles nucléaires usés, de manière à ce qu'il permette de séparer l'uranium, non seulement du plutonium mais également du neptunium, en un seul cycle de purification et qu'il rende ainsi inutile le *"deuxième cycle uranium"* lorsque les combustibles nucléaires à retraiter ont refroidi dix ans ou plus.

Les Inventeurs se sont, de plus, fixés pour but que la séparation de l'uranium du neptunium soit obtenue sans recourir à l'utilisation de puissants complexants du neptunium qui, certes, permettraient d'entraîner celui-ci dans un flux aqueux différent de celui de l'uranium, mais qui seraient susceptibles de représenter, en eux-mêmes ou par leurs produits de dégradation, des produits indésirables dans les effluents aqueux, nécessitant de soumettre ces effluents à des traitements spécifiques supplémentaires.

### EXPOSÉ DE L'INVENTION

Ce but et d'autres sont atteints par un procédé de retraitement d'un combustible nucléaire usé, qui comprend successivement :
a) la séparation de l'uranium, du plutonium et des autres actinides, des produits de fission présents dans une solution aqueuse nitrique provenant de la dissolution du combustible dans de l'acide nitrique, cette séparation comprenant la co-extraction de l'uranium(VI), du plutonium(IV) et des autres actinides(IV) ou (VI) de ladite solution aqueuse par une phase solvant non miscible à l'eau et comprenant au moins un extractant dans un diluant organique, puis le lavage de la phase solvant par une solution aqueuse nitrique ;
b) la partition de l'uranium et du plutonium en deux flux distincts, cette partition comprenant la désextraction du plutonium(III) de la phase solvant par une solution aqueuse nitrique contenant un agent réducteur apte à réduire le plutonium(IV) à l'état d'oxydation (III) et un agent anti-nitreux ;
c) la désextraction de l'uranium(VI) de la phase solvant par une solution aqueuse nitrique ;
d) la concentration en uranium(VI) de la solution aqueuse issue de l'étape c) ; et qui est caractérisé en ce qu'une partie de la solution aqueuse concentrée en uranium(VI) obtenue à l'étape d) est utilisée pour désextraire de la phase solvant le ou les actinides présents à l'état d'oxydation (IV) dans cette phase, soit au cours de l'étape b), soit entre les étapes b) et c).

Ainsi, le procédé selon l'invention diffère du premier cycle de purification du procédé PUREX tel qu'il est mis en oeuvre dans les usines modernes de retraitement des combustibles nucléaires usés, essentiellement en ce qu'il utilise une partie du flux aqueux concentré en uranium(VI), provenant des opérations de concentration situées en aval de la désextraction de l'uranium, pour enrichir la phase solvant en uranium(VI) en amont de cette désextraction de sorte à ce qu'elle approche de la saturation, et abaisser ainsi suffisamment les coefficients de distribution des actinides présents à l'état d'oxydation (IV) dans cette phase solvant pour favoriser leur passage en phase aqueuse.

Il permet, de la sorte, de désextraire les actinides(IV) de la phase solvant et, par là même, de les séparer de l'uranium(VI) avant que celui-ci ne soit désextrait à son tour.

Les actinides(IV) susceptibles d'être désextraits par le procédé selon l'invention sont principalement le neptunium qui est réduit de l'état d'oxydation (VI) à l'état d'oxydation (IV) au cours de la partition uranium/plutonium, le thorium qui est extrait à l'état d'oxydation (IV) de la solution aqueuse nitrique issue de la dissolution du combustible, et/ou le plutonium qui peut subsister, en de très faibles quantités, à l'état d'oxydation (IV) au cours de la partition.

Comme précédemment indiqué, la désextraction du ou des actinides(IV) de la phase solvant peut, en premier lieu, être réalisée au cours de l'étape b) du procédé selon l'invention, c'est-à-dire au cours de la partition uranium/plutonium, auquel cas ce ou ces actinides sont désextraits en même temps que le plutonium(III) et se joignent ainsi au flux plutonium.

Dans ce cas, la partition uranium/plutonium comprenant deux sous-étapes réalisées dans des extracteurs distincts, à savoir :
i) une première sous-étape dite *"Désextraction plutonium",* consistant à désextraire la majeure partie du plutonium(III) de la phase solvant, et
ii) une deuxième sous-étape dite *"Barrage plutonium",* consistant à parfaire la désextraction du plutonium(III) de la phase solvant, la partie de solution aqueuse concentrée en uranium(VI) est, de préférence, utilisée pour désextraire le ou les actinides(IV) au cours de la sous-étape *"Barrage plutonium".*

Pour ce faire, elle est introduite dans l'extracteur où se déroule la sous-étape *"Barrage plutonium"* et où elle est additionnée d'acide nitrique, de l'agent réducteur apte à réduire le plutonium(IV) en plutonium(III) et de l'agent anti-nitreux.

Dans ce qui précède et ce qui suit, on entend par *"extracteur",* tout appareil d'extraction liquide-liquide susceptible d'être utilisé dans les usines de retraitement des combustibles nucléaires usés comme, par exemple, un mélangeur-décanteur ou une batterie de mélangeurs-décanteurs, une colonne pulsée ou encore un extracteur centrifuge mono- ou multi-étage.

La désextraction du ou des actinides (IV) de la phase solvant peut, en second lieu, être réalisée entre les étapes b) et c) du procédé selon l'invention, c'est-à-dire entre la partition uranium/plutonium et la désextraction de l'uranium, auquel cas ce ou ces actinides sont désextraits indépendamment du plutonium et forment un troisième flux séparé à la fois du flux plutonium et du flux uranium.

Dans ce cas, la partie de solution aqueuse concentrée en uranium(VI) est utilisée pour désextraire le ou les actinides (IV) dans un extracteur spécifiquement dévolu à cette désextraction.

La partition uranium/plutonium comprenant, là également, deux sous-étapes réalisées dans des extracteurs distincts, à savoir :
i) une première sous-étape dite *"Désextraction plutonium"* consistant à désextraire la majeure partie du plutonium(III) de la phase solvant, et
ii) une deuxième sous-étape dite *"Barrage plutonium"* consistant à parfaire la désextraction du plutonium(III) de la phase solvant, ladite partie de solution aqueuse concentrée en uranium(VI) est, de préférence, introduite dans un extracteur qui est alimenté en phase solvant par l'extracteur où se déroule la sous-étape *"Barrage plutonium",* et dans lequel elle est additionnée d'acide nitrique.

Quel que soit l'extracteur dans lequel est réalisée la désextraction du ou des actinides(IV), celle-ci est obtenue en mélangeant la phase solvant présente dans cet extracteur et la partie de solution concentrée en uranium(VI) qui y est introduite, dans des conditions qui permettent à la phase solvant de s'enrichir en uranium(VI) jusqu'à approcher de la saturation et, consécutivement, à l'actinide ou aux actinides(IV) de passer en phase aqueuse, puis en séparant ce mélange en une phase solvant et une phase aqueuse contenant le ou les actinides(IV) désextraits.

De préférence, le procédé selon l'invention comprend, de plus, une étape consistant à soumettre la phase aqueuse contenant le ou les actinides(IV) désextraits (et, éventuellement, le plutonium(III) désextrait si ces actinides sont désextraits au cours de la partition uranium/plutonium) à un ou plusieurs lavages par une phase solvant non miscible à l'eau et comprenant au moins un extractant de l'uranium(VI) dans un diluant organique, en vue de récupérer l'uranium(VI) ayant suivi ces actinides lors de leur désextraction.

A cet effet, on utilise préférentiellement une phase solvant dont l'extractant et le diluant organique sont identiques à ceux de la phase solvant utilisée à l'étape a) du procédé selon l'invention.

A cet égard, la phase solvant utilisée au cours de l'étape a) comprend, de préférence, du TBP comme extractant, et du TPH comme diluant organique, et ce, préférentiellement, dans un rapport volumique de 30/70.

L'agent réducteur apte à réduire le plutonium(IV) à l'état d'oxydation (III) est de préférence du nitrate uraneux, tandis que l'agent anti-nitreux est, lui, avantageusement du nitrate d'hydrazinium.

Il est, toutefois, possible d'utiliser un autre extractant comme, par exemple, du phosphate de tri-isobutyle (TiBP) ou un monoamide et/ou un autre diluant organique comme, par exemple, le *n*-dodécane ou du kérosène, tout comme il est possible d'utiliser un autre agent réducteur comme, par exemple, du nitrate d'hydroxylammonium et/ou un autre agent anti-nitreux comme, par exemple, un anti-nitreux soluble en phase solvant.

Conformément à l'invention, la partie de solution aqueuse concentrée en uranium(VI) peut être additionnée d'un ou plusieurs agents complexants des actinides(IV) mais ces agents n'ont besoin ni d'être puissants, ni d'être présents à des teneurs élevées, et leur destruction peut aisément être intégrée aux paramètres d'optimisation du procédé selon l'invention.

A titre d'exemples de tels agents, on peut citer l'acide formique et l'acide tartrique.

De manière particulièrement préférée, l'actinide(IV) que l'on cherche principalement à désextraire au cours de l'étape b) ou entre les étapes b) et c) est le neptunium.

Le procédé selon l'invention présente de nombreux avantages.

En particulier, il permet de séparer très efficacement l'uranium des autres actinides présents dans des combustibles nucléaires usés en un seul cycle de purification par extraction liquide-liquide et de supprimer, lorsque ces combustibles ont refroidi pendant 10 ans ou plus, le *"deuxième cycle uranium"* existant dans le procédé PUREX, et ce, sans modifier de manière fondamentale le premier cycle de purification de ce procédé tel qu'il est mis en oeuvre dans les usines modernes de retraitement des combustibles nucléaires usés. Il convient même de noter que, dans le cas où la désextraction des actinides(IV) est réalisée au cours de la partition, le procédé selon l'invention peut être mis en oeuvre dans certaines des usines existantes au prix de modifications relativement mineures.

Par ailleurs, le procédé selon l'invention offre la possibilité de désextraire les actinides(IV), et notamment le neptunium(IV), en les joignant au flux plutonium et de rendre ainsi plus difficile l'utilisation du plutonium à des fins non pacifiques.

D'autres avantages et caractéristiques du procédé selon l'invention apparaîtront à la lecture du complément de description qui suit et qui se réfère à deux exemples de mise en oeuvre du procédé selon l'invention

Bien entendu, ces exemples ne sont donnés qu'à titre d'illustrations de l'objet de l'invention et ne constituent en aucun cas une limitation de cet objet.

### BRÈVE DESCRIPTION DES DESSINS

La figure 1 représente un schéma de principe du premier cycle de purification du procédé PUREX tel qu'il est mis en oeuvre dans les usines modernes de retraitement des combustibles nucléaires usés.
La figure 2 représente les variations du coefficient de distribution du neptunium(IV) entre une phase aqueuse nitrique et une phase solvant, composée de TBP à 30% en volume dans du TPH, en fonction de la teneur en uranium ([U] en g/L) de la phase solvant et pour différentes concentrations molaires en acide nitrique (■-■ : 0,5 M ; ◆-◆ : 1 M ; ★-★ : 2 M ; ▲-▲ : 3 M ; ●-● : 3,5 M) de la phase aqueuse.
La figure 3 représente un schéma de principe d'un premier exemple de mise en oeuvre du procédé selon l'invention.
La figure 4 représente un schéma de principe d'un deuxième exemple de mise en oeuvre du procédé selon l'invention.

Sur les figures 1, 3 et 4, les flux de solvant sont symbolisés par un double trait, tandis que les flux aqueux sont symbolisés par un simple trait. Par ailleurs, les opérations de lavage des phases aqueuses par le TPH n'ont volontairement pas été représentées par souci de simplification des schémas.

### EXPOSÉ DÉTAILLÉ DE MODES DE MISE EN OEUVRE PARTICULIERS

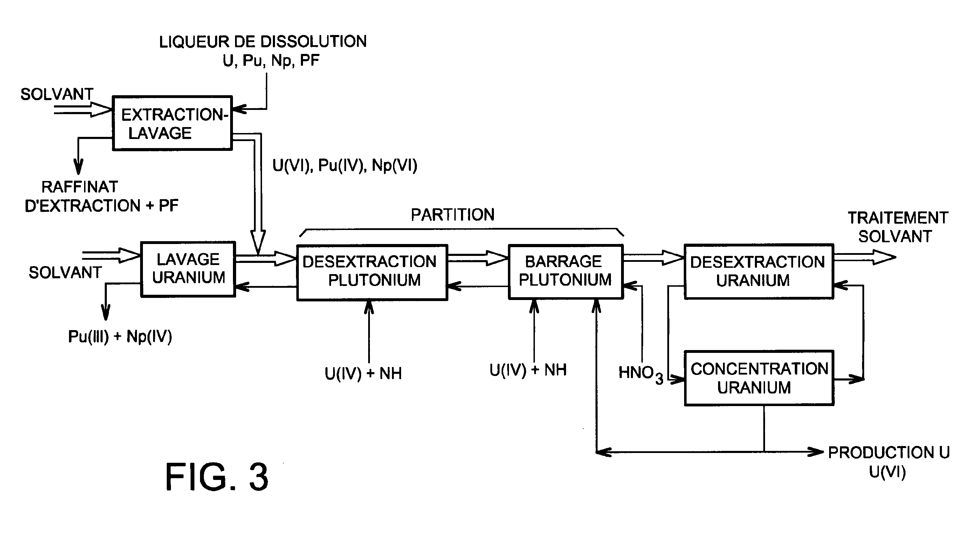

On se réfère tout d'abord à la figure 3 qui représente un schéma de principe d'un premier exemple de mise en oeuvre du procédé selon l'invention, conçu pour permettre une désextraction du neptunium(IV) au cours de la partition uranium/plutonium.

Dans cet exemple, le procédé selon l'invention comprend, comme le premier cycle de purification du procédé PUREX illustré sur la figure 1, les opérations suivantes :
- la co-extraction de l'uranium, du plutonium et du neptunium, respectivement à l'état d'oxydation (VI), (IV) et (VI), d'une liqueur de dissolution, par un solvant constitué de TBP à 30% (v/v) dans du TPH, suivie du lavage de la phase solvant issue de cette co-extraction par une solution aqueuse nitrique pour parfaire la décontamination de l'uranium, du plutonium et du neptunium en produits de fission ("*Extraction-lavage*") ;
- la partition uranium/plutonium, cette partition comprenant :
   - la désextraction du plutonium, à l'état d'oxydation (III), de la phase solvant chargée en uranium, plutonium et neptunium par une solution aqueuse nitrique renfermant du nitrate uraneux (U(IV)) et du nitrate d'hydrazinium comme agent anti-nitreux ("*Désextraction plutonium*") ;
   - le lavage de la phase solvant issue de la désextraction du plutonium par une solution aqueuse nitrique renfermant également du nitrate uraneux et du nitrate d'hydrazinium *("Barrage plutonium"*) ;
- le lavage de la phase aqueuse chargée en plutonium(III) et issue de la partition uranium/plutonium par du solvant frais constitué de TBP à 30% (v/v) dans du TPH *("Lavage uranium") ;*
- la désextraction de l'uranium(VI) de la phase solvant issue de la partition uranium/plutonium par une solution aqueuse nitrique ("*Désextraction uranium*") ; et
- la concentration de la phase aqueuse chargée en uranium(VI) et issue de la désextraction de l'uranium *("Concentration uranium").*

Comme dans le premier cycle de purification du procédé PUREX illustré sur la figure 1, le neptunium initialement extrait à l'état d'oxydation (VI) est réduit à l'oxydation (IV) par le nitrate uraneux au cours de la partition uranium/plutonium.

Toutefois, à la différence du premier cycle de purification du procédé PUREX illustré sur la figure 1, où la totalité de la solution aqueuse concentrée en uranium(VI) est dirigée vers un deuxième cycle de purification de l'uranium destiné à séparer l'uranium(VI) du neptunium(IV) présents dans cette solution, dans l'exemple de mise en oeuvre du procédé selon l'invention illustré sur la figure 3, une partie de la solution aqueuse concentrée en uranium(VI) est refluée vers l'extracteur dans lequel se déroule le *"Barrage plutonium".*

La solution aqueuse nitrique utilisée pour le *"Barrage plutonium"* est donc constituée par ce reflux concentré en uranium(VI), auquel sont ajoutés de l'acide nitrique, de préférence de molarité au plus égale à 2, et mieux encore, au plus égale à 1, ainsi que du nitrate uraneux, du nitrate d'hydrazinium, et accessoirement un complexant du neptunium(IV) tel que l'acide formique.

Le mélange intime de la solution aqueuse nitrique ainsi obtenue avec ladite phase solvant a pour effet d'enrichir cette dernière en uranium(VI) de sorte à ce qu'elle approche de la saturation, et cet enrichissement, combiné à la faible acidité qui règne dans l'extracteur, conduit le neptunium(IV) à passer en phase aqueuse.

Comme dans le premier cycle de purification du procédé PUREX illustré sur la figure 3, la phase aqueuse effluente du *"Barrage plutonium",* qui, en l'espèce, renferme à la fois du neptunium(IV) et du plutonium(III), est dirigée vers l'extracteur où se déroule la *"Désextraction plutonium"* et dans lequel elle se charge en plutonium(III), puis elle est dirigée vers l'extracteur où se déroule le *"Lavage uranium"* et dans lequel elle est lavée par du solvant frais pour récupérer l'uranium(VI) susceptible d'avoir suivi le neptunium(IV) et le plutonium(III) lors de leur désextraction.

La phase solvant effluente du *"Barrage plutonium"* est, quant à elle, dirigée vers l'extracteur où se déroule la *"Désextraction uranium"* et dans lequel l'uranium(VI) est désextrait comme il l'est habituellement dans le premier cycle de purification du procédé PUREX illustré sur la figure 1.

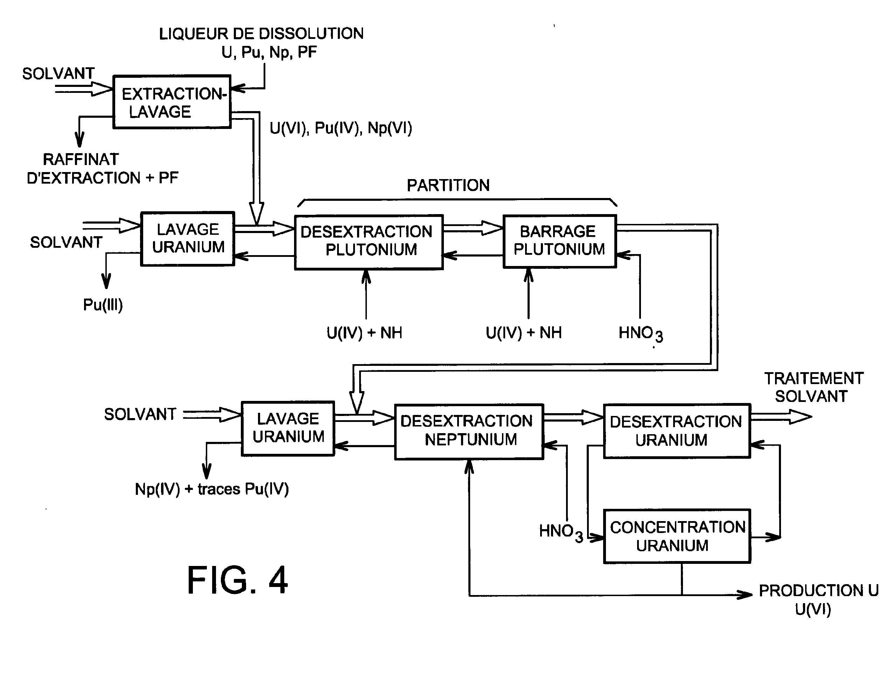

On se réfère à présent vers la figure 4 qui représente un schéma de principe d'un deuxième exemple de mise en oeuvre du procédé selon l'invention, qui, lui, est conçu pour permettre une désextraction du neptunium(IV) et des éventuelles traces de plutonium(IV) subsistant dans la phase solvant, entre la partition uranium/plutonium et la désextraction de l'uranium.

Dans cet exemple où l'on retrouve les opérations *"Extraction-lavage", "Désextraction plutonium", "Barrage plutonium", "Lavage uranium" "Désextraction uranium"* et *"Concentration uranium"* propres au procédé PUREX illustré sur la figure 1, une partie de la solution aqueuse concentrée en uranium(VI) est refluée dans un extracteur qui est spécialement dévolu à la désextraction du neptunium(IV) - laquelle est symbolisée par le bloc *"Désextraction neptunium"* sur la figure 4 - et qui est placé entre l'extracteur dans lequel se déroule le *"Barrage plutonium"* et celui de la *"Désextraction uranium".*

L'extracteur dévolu à la *"Désextraction neptunium"* est donc alimenté en phase solvant par l'extracteur du *"Barrage plutonium",* laquelle contient de l'uranium(VI), du neptunium(IV) et d'éventuelles traces de plutonium(IV), et en phase aqueuse par le reflux concentré en uranium(VI), auquel est ajouté de l'acide nitrique, de préférence de molarité au plus égale à 2, et mieux encore, au plus égale à 1, et accessoirement un complexant du neptunium(IV) tel que l'acide formique.

Comme précédemment, le mélange intime de la solution aqueuse nitrique ainsi obtenue avec ladite phase solvant a pour effet d'enrichir cette dernière en uranium(VI) de sorte à ce qu'elle approche de la saturation, et cet enrichissement, combiné à la faible acidité qui règne dans l'extracteur, conduit le neptunium(IV) et les éventuelles traces de plutonium(IV) à passer en phase aqueuse.

La phase aqueuse effluente de la *"Désextraction neptunium",* qui, en l'espèce, renferme du neptunium(IV) et, le cas échéant, du plutonium(IV), est dirigée vers un extracteur dans lequel elle est lavée par du solvant frais, également constitué de TBP à 30% (v/v) dans du TPH, pour récupérer l'uranium(VI) susceptible d'avoir suivi le neptunium(IV) lors de sa désextraction - ce lavage étant symbolisé par un deuxième bloc *"Lavage uranium"* sur la figure 4 -, tandis que la phase solvant effluente de la *"Désextraction neptunium"* est dirigée vers l'extracteur de la *"Désextraction uranium"* où l'uranium(VI) est désextrait comme il l'est habituellement dans le premier cycle de purification du procédé PUREX illustré sur la figure 1.

Quel que soit le mode de mise en oeuvre du procédé selon l'invention, les Inventeurs considèrent qu'il est souhaitable et possible de régler les différents paramètres de fonctionnement de l'extracteur dans lequel est désextrait le neptunium(IV), et notamment les débits d'alimentation en phase solvant et en solution aqueuse concentrée en uranium(VI), de façon à amener la teneur en uranium(VI) de la phase solvant dans cet extracteur à une valeur, de préférence, de l'ordre de 90 à 105 g/L, la saturation en uranium(VI) étant atteinte à 114 g/L.

Ces paramètres peuvent aisément être déterminés et optimisés au moyen du logiciel PAREX (développé par le COMMISSARIAT A L'ENERGIE ATOMIQUE) qui dispose des coefficients de distribution à la fois de l'uranium(VI) et du neptunium(IV).

A titre d'exemple, une simulation a été réalisée à l'aide de ce logiciel pour le deuxième exemple de mise en oeuvre du procédé selon l'invention illustré sur la figure 4. Dans cette simulation, aucune utilisation d'un quelconque complexant spécifique des degrés d'oxydation (IV) n'a été envisagée.

Les données d'entrée de cette simulation ont été les suivantes :
Flux de phase solvant sortant de l'extracteur *"Barrage plutonium"* :
   Débit : 1746 L/heure
   U(VI) : 75,5 g/L
   HNO₃ : 0,017 mol/L
   Np(IV) : 38 mg/L
Flux de phase aqueuse (dénommé *"HNO₃"* sur la figure 4) entrant dans l'extracteur *"Désextraction neptunium"* :
   Débit : 70 L/heure
   U(VI) : 0 g/L
   HNO₃ : 0,1 mol/L
   Np(IV) : 0 mg/L
Flux de phase aqueuse entrant dans l'extracteur *"Désextraction neptunium"* et provenant de l'extracteur *"Concentration uranium"* :
   Débit : 200 L/heure
   U(VI) : 400 g/L
   HNO₃ : 0,5 mol/L
   Np(IV) : < 1 mg/L
Flux de phase solvant (dénommé *"Solvant"* sur la figure 4) entrant dans l'extracteur *"Lavage uranium"* attenant à l'extracteur *"Désextraction neptunium"* :
   Débit : 254 L/heure
   TBP à 30%
   HNO₃ : 0 mol/L

Pour ces données, et en choisissant une batterie de partition à 2 étages (dans le sens du flux de la phase solvant), ont été obtenues les compositions de phase solvant et de phase aqueuse suivantes :
Phase solvant sortant de l'extracteur *"Désextraction neptunium"* :
   Débit : 2026 L/heure
   U (VI) : 105 g/L
   HNO₃ : 3,5.10⁻³ mol/L
   Np (IV) : 0,18 mg/L
Phase aqueuse sortant de l'extracteur *"Lavage uranium"* attenant à l'extracteur *"Désextraction neptunium"* :
   Débit : 247 L/heure
   U(VI) : 5 mg/L
   HNO₃ : 0,5 mol/L
   Np(IV) : 267 mg/L

Le facteur de décontamination de l'uranium en neptunium est donc de 180 et l'objectif de décontamination recherché est atteint.

## Revendications

1. Procédé de retraitement d'un combustible nucléaire usé, qui comprend successivement :
a) la séparation de l'uranium, du plutonium et des autres actinides, des produits de fission présents dans une solution aqueuse nitrique provenant de la dissolution du combustible dans de l'acide nitrique, cette séparation comprenant la co-extraction de l'uranium(VI), du plutonium(IV) et des autres actinides(IV) ou (VI) de ladite solution aqueuse par une phase solvant non miscible à l'eau et comprenant au moins un extractant dans un diluant organique, puis le lavage de la phase solvant par une solution aqueuse nitrique ;
b) la partition de l'uranium et du plutonium en deux flux distincts, cette partition comprenant la désextraction du plutonium(III) de la phase solvant par une solution aqueuse nitrique contenant un agent réducteur apte à réduire le plutonium(IV) à l'état d'oxydation (III) ;
c) la désextraction de l'uranium(VI) de la phase solvant par une solution aqueuse nitrique ;
d) la concentration en uranium(VI) de la solution aqueuse nitrique issue de l'étape c) ;
et qui est **caractérisé en ce qu'**une partie de la solution aqueuse concentrée en uranium(VI) obtenue à l'étape d) est utilisée pour désextraire de la phase solvant le ou les actinides présents à l'état d'oxydation (IV) dans cette phase, soit au cours de l'étape b), soit entre les étapes b) et c).

2. Procédé selon la revendication 1, **caractérisé en ce que** le ou les actinides(IV) sont le neptunium(IV), le thorium(IV) et/ou le plutonium(IV).

3. Procédé selon la revendication 1 ou la revendication 2, **caractérisé en ce que**, l'étape b) comprenant deux sous-étapes réalisées dans des extracteurs distincts, à savoir :
i) une première sous-étape consistant à désextraire la majeure partie du plutonium(III) de la phase solvant, et
ii) une deuxième sous-étape consistant à parfaire la désextraction du plutonium(III) de la phase solvant,
ladite partie de solution aqueuse concentrée en uranium(VI) est préférentiellement utilisée pour désextraire les actinides(IV) au cours de la sous-étape ii).

4. Procédé selon la revendication 3, **caractérisé en ce que** ladite partie de solution aqueuse concentrée en uranium(VI) est introduite dans l'extracteur où se déroule la sous-étape ii) et où elle est additionnée d'acide nitrique, de l'agent réducteur apte à réduire le plutonium(IV) en plutonium(III) et d'un agent anti-nitreux.

5. Procédé selon la revendication 1 ou la revendication 2, **caractérisé en ce que** ladite partie de solution aqueuse concentrée en uranium(VI) est utilisée pour désextraire les actinides(IV) dans un extracteur spécifiquement dévolu à cette désextraction.

6. Procédé selon la revendication 5, **caractérisé en ce que** l'étape b) comprenant deux sous-étapes réalisées dans des extracteurs distincts, à savoir :
i) une première sous-étape consistant à désextraire la majeure partie du plutonium(III) de la phase solvant, et
ii) une deuxième sous-étape consistant à parfaire la désextraction du plutonium(III) de la phase solvant,
ladite partie de solution aqueuse concentrée en uranium(VI) est introduite dans un extracteur qui est alimenté en phase solvant par l'extracteur où se déroule la sous-étape ii), et dans lequel elle est additionnée d'acide nitrique.

7. Procédé selon l'une quelconque des revendications précédentes, **caractérisé en ce que** la désextraction du ou des actinides(IV) de la phase solvant est obtenue en mélangeant cette dernière et ladite partie de solution concentrée en uranium(VI), puis en séparant ce mélange en une phase solvant et une phase aqueuse contenant le ou les actinides(IV) désextraits.

8. Procédé selon la revendication 7, **caractérisé en ce qu'**il comprend, de plus, une étape consistant à soumettre la phase aqueuse contenant le ou les actinides(IV) désextraits à un ou plusieurs lavages par une phase solvant non miscible à l'eau et comprenant un extractant de l'uranium(VI) dans un diluant organique.

9. Procédé selon la revendication 8, **caractérisé en ce que** l'extractant et le diluant organique de ladite phase solvant sont identiques à ceux de la phase solvant utilisée à l'étape a).

10. Procédé selon l'une quelconque des revendications précédentes, **caractérisé en ce que** la phase solvant utilisée au cours de l'étape a) comprend du phosphate de tri-*n*-butyle comme extractant.

11. Procédé selon l'une quelconque des revendications précédentes, **caractérisé en ce que** la phase solvant utilisée au cours de l'étape a) comprend du tétrapropylène hydrogéné comme diluant organique.

12. Procédé selon l'une quelconque des revendications précédentes, **caractérisé en ce que** l'agent réducteur apte à réduire le plutonium(IV) en plutonium(III) est le nitrate uraneux.

13. Procédé selon la revendication 4 ou la revendication 6, **caractérisé en ce que** ladite partie de solution aqueuse concentrée en uranium(VI) est de plus additionnée d'un ou plusieurs agents complexants des actinides(IV).

14. Procédé selon l'une quelconque des revendications précédentes, **caractérisé en ce que** l'actinide(IV) que l'on cherche principalement à désextraire au cours de l'étape b) ou entre les étapes b) et c) est le neptunium.

15. Utilisation d'un procédé selon l'une quelconque des revendications 1 à 14 pour retraiter un combustible nucléaire usé à base d'oxyde d'uranium, d'oxyde mixte d'uranium et de plutonium ou d'oxyde mixte d'uranium et de thorium.

## Claims

1. Method for reprocessing a spent nuclear fuel, which successively comprises:
a) separating the uranium, plutonium and other actinides from the fission products present in an aqueous nitric solution obtained by dissolving the fuel in nitric acid, this separation comprising co-extraction of uranium(VI), plutonium(IV) and other actinides(IV) or (VI) from said aqueous solution by using a water-immiscible solvent phase comprising at least one extractant in an organic diluent, then scrubbing the solvent phase with an aqueous nitric solution;
b) dividing the uranium and plutonium into two separate flows, this partition comprising back-extraction of the plutonium(III) from the solvent phase by using an aqueous nitric solution which contains a reducing agent capable of reducing plutonium(IV) to oxidation state (III);
c) back-extracting the uranium(VI) from the solvent phase by using an aqueous nitric solution;
d) concentrating the aqueous nitric solution resulting from step c) with respect to uranium(VI);
and which is **characterized in that** some of the uranium(VI)-concentrated aqueous solution obtained in step d) is used for back-extracting from the solvent phase the actinide or actinides present in oxidation state (IV) in this phase, either during step b) or between steps b) and c).

2. Method according to Claim 1, **characterized in that** the actinide(IV) or actinides(IV) are neptunium(IV), thorium(IV) and/or plutonium(IV).

3. Method according to Claim 1 or Claim 2, **characterized in that**, step b) comprising two substeps carried out in separate reactors, namely:
i) a first substep consisting in back-extracting the majority of the plutonium(III) from the solvent phase, and
ii) a second substep consisting in completing the back-extraction of plutonium(III) from the solvent phase,
said uranium(VI)-concentrated aqueous solution part is preferably used for back-extracting the actinides(IV) during substep ii).

4. Method according to Claim 3, **characterized in that** said uranium(VI)-concentrated aqueous solution part is introduced into the reactor in which substep ii) takes place, and in which it is supplemented with nitric acid, the reducing agent capable of reducing plutonium(IV) to plutonium(III) and an anti-nitrous agent.

5. Method according to Claim 1 or Claim 2, **characterized in that** the said uranium(VI)-concentrated aqueous solution part is used for back-extracting the actinides(IV) in an extractor specifically allocated to this back-extraction.

6. Method according to Claim 5, **characterized in that**, step b) comprising two substeps carried out in separate reactors, namely:
i) a first substep consisting in back-extracting the majority of the plutonium(III) from the solvent phase, and
ii) a second substep consisting in completing the back-extraction of plutonium(III) from the solvent phase,
said uranium(VI)-concentrated aqueous solution part is introduced into an extractor which is supplied with solvent phase by the extractor in which substep ii) takes place, and in which it is supplemented with nitric acid.

7. Method according to any one of the preceding claims, **characterized in that** the back-extraction of the actinide(IV) or actinides(IV) from the solvent phase is obtained by mixing the latter and said uranium(VI)-concentrated solution part, then by separating this mixture into a solvent phase and an aqueous phase containing the back-extracted actinide(IV) or actinides(IV).

8. Method according to Claim 7, **characterized in that** it furthermore comprises a step consisting in subjecting the aqueous phase containing the back-extracted actinide(IV) or actinides(IV) to one or more scrubbings with a water-immiscible solvent phase comprising an extractant of uranium(VI) in an organic diluent.

9. Method according to Claim 8, **characterized in that** the extractant and the organic diluent of said solvent phase are identical to those of the solvent phase used in step a).

10. Method according to any one of the preceding claims, **characterized in that** the solvent phase used during step a) comprises tri-n-butyl phosphate as an extractant.

11. Method according to any one of the preceding claims, **characterized in that** the solvent phase used during step a) comprises hydrogenated tetrapropylene as an organic diluent.

12. Method according to any one of the preceding claims, **characterized in that** the reducing agent capable of reducing plutonium(IV) to plutonium(III) is uranous nitrate.

13. Method according to Claim 4 or Claim 6, **characterized in that** said uranium(VI)-concentrated aqueous solution part is furthermore supplemented with one or more agents complexing actinides(IV).

14. Method according to any one of the preceding claims, **characterized in that** the actinide(IV) principally intended to be back-extracted during step b) or between steps b) and c) is neptunium.

15. Use of a method according to any one of Claims 1 to 14 for reprocessing a spent nuclear fuel based on uranium oxide, mixed oxide of uranium and plutonium or mixed oxide of uranium and thorium.

## Patentansprüche

1. Verfahren zur Wiederaufbereitung eines gebrauchten Kernbrennstoffs, das aufeinanderfolgend umfasst:
a) die Abtrennung von Uran, Plutonium und anderen Actinoiden von Spaltprodukten, die in einer durch Auflösung des Brennstoffs in Salpetersäure erhaltenen salpetersauren wässrigen Lösung vorhanden sind, wobei diese Abtrennung die Koextraktion von Uran(VI), Plutonium(IV) und anderen Actinoiden(IV) oder (VI) aus der wässrigen Lösung durch eine Lösemittelphase, die mit Wasser nicht mischbar ist und mindestens ein Extraktionsmittel in einem organischen Verdünnungsmittel umfasst, und dann das Waschen der Lösemittelphase durch eine salpetersaure wässrige Lösung umfasst;
b) die Partitionierung von Uran und Plutonium in zwei verschiedene Ströme, wobei diese Partitionierung die Desextraktion von Plutonium(III) aus der Lösemittelphase durch eine salpetersaure wässrige Lösung, die ein Reduktionsmittel enthält, das zur Reduktion von Plutonium(IV) in die Oxidationsstufe(III) fähig ist, umfasst;
c) die Desextraktion von Uran(VI) aus der Lösemittelphase durch eine salpetersaure wässrige Lösung;
d) die Konzentration der in der Stufe c) erhaltenen salpetersauren wässrigen Lösung an Uran(VI);
und wobei das Verfahren **dadurch gekennzeichnet ist, dass** ein Teil der in der Stufe d) erhaltenen, an Uran(VI) konzentrierten wässrigen Lösung zur Desextraktion von einem Actinoidelement oder Actinoiden, die in dieser Phase in der Oxidationsstufe(IV) vorhanden sind, aus der Lösemittelphase entweder im Laufe der Stufe b) oder zwischen den Stufen b) und c) verwendet wird.

2. Verfahren nach Anspruch 1, das **dadurch gekennzeichnet ist, dass** die Actinoiden(IV) Neptunium(IV), Thorium(IV) und/oder Plutonium(IV) sind.

3. Verfahren nach Anspruch 1 oder Anspruch 2, das **dadurch gekennzeichnet ist, dass** die Stufe b) zwei Teilstufen umfasst, die in verschiedenen Extraktionsvorrichtungen realisiert werden, d. h.:
i) eine erste Teilstufe, die aus der Desextraktion des Hauptteils von Plutonium(III) aus der Lösemittelphase besteht, und
ii) eine zweite Teilstufe, die aus dem Vervollständigen der Desextraktion von Plutonium(III) aus der Lösemittelphase besteht,
wobei der Teil der an Uran(VI) konzentrierten wässrigen Lösung vorzugsweise zur Desextraktion der Actinoiden(IV) im Laufe der Teilstufe ii) verwendet wird.

4. Verfahren nach Anspruch 3, das **dadurch gekennzeichnet ist, dass** der Teil der an Uran(VI) konzentrierten wässrigen Lösung in die Extraktionsvorrichtung, in der die Teilstufe ii) durchgeführt wird oder in der Salpetersäure ein Reduktionsmittel, das zur Reduktion von Plutonium(IV) in Plutonium(III) fähig ist, und ein anti-salpeterhaltiges Mittel zugesetzt wird, eingeführt wird.

5. Verfahren nach Anspruch 1 oder Anspruch 2, das **dadurch gekennzeichnet ist, dass** der Teil der an Uran(VI) konzentrierten wässrigen Lösung zur Desextraktion der Actinoiden(IV) in einer für diese Desextraktion speziell entwickelten Extraktionsvorrichtung verwendet wird.

6. Verfahren nach Anspruch 5, das **dadurch gekennzeichnet ist, dass** die Stufe b) zwei Teilstufen umfasst, die in verschiedenen Extraktionsvorrichtungen realisiert werden, d. h.:
i) eine erste Teilstufe, die aus der Desextraktion des Hauptteils von Plutonium(III) aus der Lösemittelphase besteht, und
ii) eine zweite Teilstufe, die aus dem Vervollständigen der Desextraktion von Plutonium(III) aus der Lösemittelphase besteht,
wobei der Teil der an Uran(VI) konzentrierten wässrigen Lösung in eine Extraktionsvorrichtung eingeführt wird, die durch die Extraktionsvorrichtung, in der die Teilstufe ii) abläuft, mit der Lösemittelphase gespeist wird und in der dieser mit Salpetersäure versetzt wird.

7. Verfahren nach einem der vorhergehenden Ansprüche, das **dadurch gekennzeichnet ist, dass** die Desextraktion des Actinoidelements(IV) oder der Actinoiden(IV) aus der Lösemittelphase durch Mischen dieser letzteren und des Teils der an Uran(VI) konzentrierten Lösung, dann durch Auftrennen dieses Gemischs in eine Lösemittelphase und in eine wässrige Phase, die das desextrahierte Actinoidelement(IV) oder die desextrahierten Actinoiden(IV) enthält, erreicht wird.

8. Verfahren nach Anspruch 7, das **dadurch gekennzeichnet ist, dass** es ferner eine Stufe umfasst, die aus dem Durchführen von einem oder mehreren Waschvorgängen der wässrigen Phase, die das desextrahierte Actinoidelement(IV) oder die desextrahierten Actinoiden(IV) enthält, mit einer Lösemittelphase, die mit Wasser nicht mischbar ist und ein Extraktionsmittel für Uran(VI) in einem organischen Verdünnungsmittel umfasst, besteht.

9. Verfahren nach Anspruch 8, das **dadurch gekennzeichnet ist, dass** das Extraktionsmittel und das organische Verdünnungsmittel der Lösemittelphase identisch mit denen der in der Stufe a) verwendeten Lösemittelphase sind.

10. Verfahren nach einem der vorhergehenden Ansprüche, das **dadurch gekennzeichnet ist, dass** die im Laufe der Stufe a) verwendete Lösemittelphase Tri-n-butylphosphat als Extraktionsmittel umfasst.

11. Verfahren nach einem der vorhergehenden Ansprüche, das **dadurch gekennzeichnet ist, dass** die im Laufe der Stufe a) verwendete Lösemittelphase hydriertes Tetrapropylen als organisches Verdünnungsmittel umfasst.

12. Verfahren nach einem der vorhergehenden Ansprüche, das **dadurch gekennzeichnet ist, dass** das Reduktionsmittel, das zur Reduktion von Plutonium(IV) in Plutonium(III) fähig ist, Urannitrat ist.

13. Verfahren nach Anspruch 4 oder Anspruch 6, das **dadurch gekennzeichnet ist, dass** der Teil der an Uran(VI) konzentrierten wässrigen Lösung ferner mit einem oder mehreren Komplexierungsmitteln für Actinoide(IV) versetzt ist.

14. Verfahren nach einem der vorhergehenden Ansprüche, das **dadurch gekennzeichnet ist, dass** das Actinoidelement(IV), das hauptsächlich im Laufe der Stufe b) oder zwischen den Stufen b) und c) desextrahiert werden soll, Neptunium ist.

15. Verwendung eines Verfahrens nach einem der Ansprüche 1 bis 14 zur Wiederaufbereitung eines gebrauchten Kernbrennstoffs auf der Basis von Uranoxid, eines Mischoxids von Uran und Plutonium oder eines Mischoxids von Uran und Thorium.
